# EUROPÄISCHE PATENTANMELDUNG

(11) **EP 1 326 073 A1**
(43) Veröffentlichungstag der Anmeldung: **09.07.2003**
(21) Anmeldenummer: 03000191.1
(22) Anmeldetag: 07.01.2003
(51) Int. Cl.: G01N 30/60, B01L 3/00

(54) **Verwendung einer Verbindungsvorrichtung für Kapillaren, Verfahren und Anschlüsse zum Verbinden von Kapillaren**

(30) Priorität: 07.01.2002 DE 10200267
(71) Anmelder: Wicom GmbH, 64646 Heppenheim (DE)
(72) Erfinder: Fera, Brian, Dr., 64646 Heppenheim (DE); Seekamp, Heinrich, 28832 Achim (DE)
(74) Vertreter: Schmid, Rudolf, Dipl.-Ing. Patentanwalt

(57) **Zusammenfassung**

Die Erfindung betrifft eine Verwendung einer Verbindungsvorrichtung (1) zur Kopplung von mindestens vier Kapillaren (7, 10, 11, 13), insbesondere zur Kopplung von mindestens einer Trennkapillare (7), einer Spülgaskapillare (10) und zwei Ausgangskapillaren (11, 13) in der Gaschromatographie oder zur Kopplung mindestens einer Trennkapillare (7) mit einer Restriktionskapillare (11) zu einem Niederdrucksystem, wie z. B. einem Massenspektrometer, einer Spülgaskapillare (10) und einer weiteren Ausgangskapillare (13).

## Beschreibung

Die Erfindung betrifft eine Verwendung einer Verbindungsvorrichtung für Kapillaren mit den Merkmalen des Anspruchs 1 und ein Verfahren zum Verbinden von Kapillaren mit den Merkmalen des Oberbegriffs des Anspruchs 5 und Anschlüsse zum Verbinden von Kapillaren mit den Merkmalen des Anspruchs 6.

Verbindungsvorrichtungen zur Kopplung von zwei Trennkapillaren kommen zum Einsatz in der Gaschromatographie oder zur Kopplung mindestens einer Trennkapillare mit einer Restriktionskapillare zu einem Niederdrucksystem, wie z. B. einem Massenspektrometer.

Aus der EP 0 841 564 A1 ist eine Verbindungsvorrichtung zur Kopplung von Kapillaren bekannt. Diese Verbindungsvorrichtung des Standes der Technik umfaßt ein Aufnahmeund ein Dichtungselement. Das Aufnahmeelement ist mit einer Führungsbohrung versehen, in die eine Kapillare eingeführt werden kann. Das verschiebliche Dichtungselement kann die Führungsbohrung öffnen oder schließen.

Aus der EP 0 985 928 A1 ist ebenfalls eine Verbindungsvorrichtung zur Kopplung von Kapillaren in einem Gaschromatographen bekannt. Die Verbindungsvorrichtung der EP 0 985 928 A1 weist einen Metallhalter mit Metallbolzen, Hilfsgasanschluss und Glasverbinder auf.

Mit Rändelschrauben werden konische Graphit Ferrules zur Abdichtung des Systems mit ihrer planen Seite gegen die Enden der beidseitig nach innen konisch zulaufenden Verbindungsvorrichtung gepreßt. Zum Wechseln der Verbindungsvorrichtung wird die säulenseitige Rändelschraube aus dem Metallhalter geschraubt und die Verbindungsvorrichtung abgezogen. Dabei schließt ein Metallbolzen im Halter die Öffnung der Verbindungsvorrichtung ab und dichtet somit schwach gegen die Umwelt ab. Während des Wechsels der Verbindungsvorrichtung wird Helium über ein Spülgasanschluß im Überschuss zugeführt, so dass Außenluft nur über Diffusion in die Verbindungsvorrichtung und somit in den Gaschromatographen gelangen kann. Nachteilig bei diesem bekannten Stand der Technik ist die unflexible, aufwendige und unzuverlässige Dichtung mit geringer Haltbarkeit der Verbindungsvorrichtung.

Bekannt ist auch aus "Progress in All-Glass Stream Splitting Systems in Capillary Gas Chromatography, Part I: Application of a Simple Glass-Cap-Cross as Effluent Splitter ...", W. Bretschneider und R. Werkhoff, HRC & GC Vol 11 (7/1988) 543-546" der Einsatz eines Glass-Cap-Cross Verbinders in der Gaschromatographie zum Aufteilen eines Gasstroms nach der Trennsäule auf zwei unterschiedliche Detektoren. Variable Splitverhältnisse zwischen 1:1 und 1:50 können durch Variation der Länge und des inneren Durchmessers der Kapillaren, die zu den Detektoren führen, eingestellt werden. Nachteile treten jedoch noch beim Wechseln der Kapillaren auf.

Aufgabe der Erfindung ist es eine Verwendung einer Verbindungsvorrichtung zur Kopplung von mindestens vier Kapillaren zu schaffen, die flexibel anwendbar ist und beim Wechseln der Kapillaren einfach und zuverlässig dichtet, und ein einfaches und zuverlässig dichtendes Verfahren und Anschlüsse zur Kopplung von derartigen Kapillaren zu schaffen, das flexibel anwendbar ist.

Die Lösung erfolgt mit einer Verwendung einer Verbindungsvorrichtung zur Kopplung von mindestens vier Kapillaren mit den Merkmalen des Anspruchs 1, einem Verfahren zum vakuumschonenden Wechsel der Kapillaren bei Verwendung einer Verbindungsvorrichtung zur Kopplung von mindestens vier Kapillaren mit den Merkmalen des Anspruchs 5 und Anschlüssen zum Verbinden von Kapillaren mit den Merkmalen des Anspruchs 6.

Gemäß der Erfindung ist eine Verwendung einer Verbindungsvorrichtung zur Kopplung von mindestens vier Kapillaren, insbesondere zur Kopplung von mindestens einer Trennkapillare, einer Spülgaskapillare und zwei Ausgangskapillaren in der Gaschromatographie oder zur Kopplung mindestens einer Trennkapillare mit einer Restriktionskapillare zu einem Niederdrucksystem, wie z. B. einem Massenspektrometer, einer Spülgaskapillare und einer weiteren Ausgangskapillare vorgesehen, mit einem Glasdom und einer Überwurfmutter, die eine Graphithülsendichtung gegen den Glasdom zur Anlage bringt, einem Metallhalter, auf dem der Glasdom montiert ist, und Anschlüssen am Metallhalter und Schlitzmuttern, mit denen die Kapillaren über Graphithülsendichtungen jeweils gegen die Anschlüsse pressbar sind, wobei für vakuumschonenden Wechsel der Kapillaren eine dieser Kapillaren zu einem Niederdrucksystem führt, wie z. B. einem Massenspektrometer, und mindestens eine andere Kapillare zur Ableitung des überschüssigen Gas aus der Spülgaskapillare dient. Gemäß der Erfindung ergibt sich eine Verbindungsvorrichtung, die bei geringem Anpressdruck, d. h. einem Anpressdruck, der durch Anschrauben mit der Hand bewirkt werden kann, zuverlässig abdichtet bis zu 400° C.

Gemäß einer vorteilhaften Ausgestaltung der Erfindung sind Ausgangskapillaren, mit n = 2, 3, ..., an der Verbindungsvorrichtung koppelbar vorgesehen, so daß insbesondere weitere Detektoren anschließbar sind, so daß z. B. der Gasfluss von einer Trennsäule des Gaschromatographen aufgeteilt und z. B. weitere analytische Informationen aus den Detektoren erhalten werden können.

Gemäß einer weiteren vorteilhaften Ausgestaltung der Erfindung ist die Ausgangskapillare zum Niederdrucksystem mit geeigneter Länge und Innendurchmesser vorgesehen für feste Teilungsverhältnisse.

Gemäß der Erfindung wird ein Verfahren mit einer vorteilhaften Ausgestaltung der Erfindung durch einfache Handhabung erreicht durch Abschrauben der Schlitzmutter vom Metallhalter und seitliches Wegnehmen von der Kapillare zum Wechseln der Kapillare, und Zuführen von Helium im Überschuss durch die Spülgaskapillare während des Wechselns und Einstellen der ursprünglichen Flussrate für das Helium aus der Spülgaskapillare nach Anschluss der Trennkapillare.

Gemäß der Erfindung ist ein Anschluss zur Kopplung von Kapillaren, insbesondere zur Kopplung einer Trennkapillare, einer Spülgaskapillare oder Ausgangskapillare in der Gaschromatographie oder zur Kopplung einer Trennkapillare mit einer Restriktionskapillare zu einem Niederdrucksystem, wie z. B. einem Massenspektrometer, einer Spülgaskapillare oder einer Ausgangskapillare, mit einem Glaseinsatz versehen, der mit einer Graphithülsendichtung in einer Schraube montiert ist, und einem Verbindungsadapter, in den der Glaseinsatz mit einer Graphithülsendichtung montiert ist, für eine Kapillare zu einem Niederdrucksystem, wie z. B. einem Massenspektrometer.

Gemäß einer weiteren vorteilhaften Ausgestaltung der Erfindung ist die Kapillare zum Niederdrucksystem mit einem Einsatz im Verbindungsadapter gehalten und eine Silberdichtung ist vorgesehen zwischen Einsatz und Verbindungsadapter.

Gemäß einer weiteren vorteilhaften Ausgestaltung der Erfindung ist die Schraube als Metallhohlschraube ausgebildet.

Die Erfindung wird im folgenden anhand eines bevorzugten Ausführungsbeispiels dargestellt. Es zeigen:
- Fig. 1:: eine Verbindungsvorrichtung gemäß der Erfindung und
- Fig. 2:: einen Anschluß gemäß der Erfindung

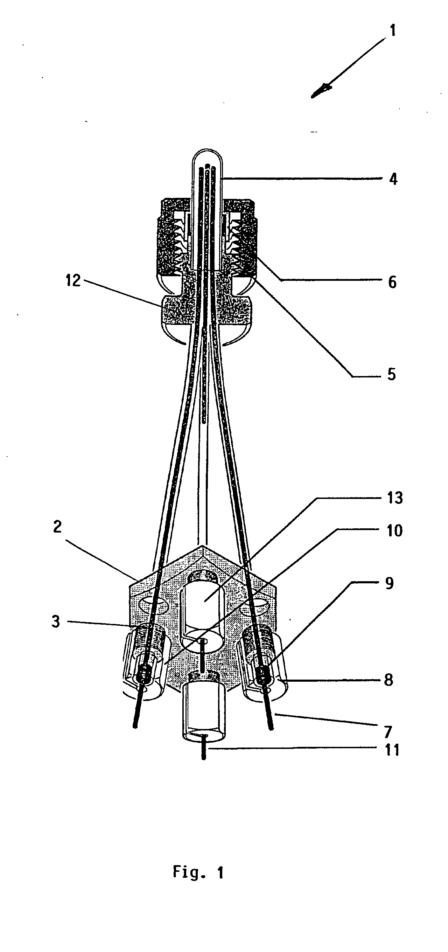

- Fig. 1:: Eine Verbindungsvorrichtung 1 weist einen Metallhalter 2 mit Anschlüssen 3 auf.

An den Metallhalter 2 schließt ein Glasdom 4 an. Eine Überwurfmutter 5 dichtet gegen ein koaxiales Kopfteil 12 den Glasdom 4 mit einer ¼ inch Graphithülsendichtung 6 ab.

Eine Gaschromatographie-Trennkapillare 7 mündet an Anschluss 3 durch den Metallhalter 2 in den Glasdom 4. Die Trennkapillare 7 ist mit einer auf den Anschluß 3 mit der Hand schraubbaren Schlitzmutter 8 am Metallhalter 2 befestigt. Die Schlitzmutter 8 dichtet mit einer Graphithülsendichtung 9 die Trennkapillare 7 am Anschluss 3 ab.

Eine Spülgas-Kapillare 10 und optional als Ausgang eine Restriktionskapillare 11 zu einem Niederdrucksystem, wie z. B. einem Massenspektrometer (nicht dargestellt), und weitere Ausgänge 13 zu Detektoren sind wie Trennkapillare 7 am Metallhalter 2 montierbar.

Verfahren und Anschluß zur Montage und zum Wechseln von Kapillaren an der Verbindungsvorrichtung 1

Kapillaren 7, 10, 11 und 13 werden in den Glasdom 4 durch die Anschlüsse 3 an dem Metallhalter 2 eingeführt. Abdichten der Kapillaren 7, 10, 11 und 13 erfolgt mit Graphithülsendichtungen 9 und Verschrauben der Kapillaren 7, 10, 11 und 13 mit den Schlitzmuttern 8 gegen den Metallhalter 2.

Die Enden der Kapillaren 7, 10, 11 und 13 können im Glasdom 4 mit Sichtkontrolle bis auf ein Minimum zusammen geschoben werden.

Zum Wechseln der Kapillare 7 wird die Schlitzmutter 8 vom Metallhalter 2 abgeschraubt und seitlich weggenommen von der Kapillare 7. Während des Wechsels der Kapillare 7 wird Helium im Überschuss durch die Spülgaskapillare 10 zugeführt und die ursprüngliche Flussrate für das Helium aus der Spülgaskapillare nach Anschluss der Trennkapillare wieder eingestellt.

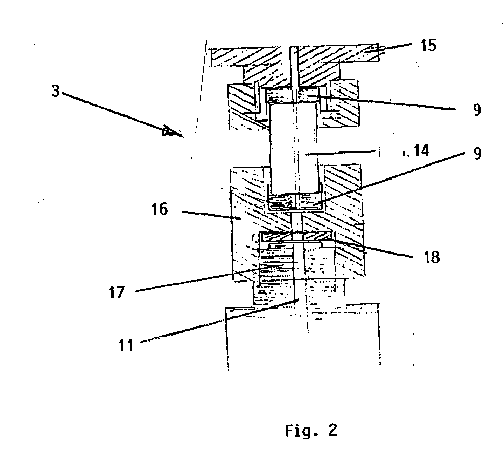

Fig. 2: Ein Anschluss 3 zur Kopplung von Kapillaren 7 ist mit einem Glaseinsatz 14 versehen, der mit einer Graphithülsendichtung 9 in einer Metallhohlschraube 15 montiert ist. Der Glaseinsatz 14 mündet koaxial in einen Verbindungsadapter 16, in den der Glaseinsatz 14 mit einer Graphithülsendichtung 9 montiert ist, für eine Restriktionskapillare 11 zu einem Niederdrucksystem, wie z. B. einem Massenspektrometer.

Die Restriktionskapillare 11 zum Niederdrucksystem ist mit einem Einsatz 17 der Transferleitung im Verbindungsadapter 16 gehalten und eine Silberdichtung 18 ist vorgesehen zwischen Einsatz 17 und Verbindungsadapter 16 zur Abdichtung zwischen Anschluss 3 und der Kopplung von Kapillaren 7.

Durch eine Bohrung der Metallhohlschraube 15 und die Graphithülsendichtung 9 wird Kapillare 7 in den Glaseinsatz 14 eingeführt und mit der Metallhohlschraube 15 befestigt. Zum Wechseln der Kapillare 7 wird die Metallhohlschraube 15 aus dem Anschluß 3 geschraubt und mit der Graphithülsendichtung 9 von Kapillare 7 abgezogen. Die Kapillare 11 zum Niederdrucksystem bleibt mit der Graphithülsendichtung 9 und dem Glaseinsatz 14 beim Wechseln der Kapillare 7 im Verbindungsadapter 16.

## Patentansprüche

1. Verwendung einer Verbindungsvorrichtung (1) zur Kopplung von mindestens vier Kapillaren (7, 10, 11, 13), insbesondere zur Kopplung von mindestens einer Trennkapillare (7), einer Spülgaskapillare (10) und zwei Ausgangskapillaren (11, 13) in der Gaschromatographie oder zur Kopplung mindestens einer Trennkapillare (7) mit einer Restriktionskapillare (11) zu einem Niederdrucksystem, wie z. B. einem Massenspektrometer, einer Spülgaskapillare (10) und einer weiteren Ausgangskapillare (13), mit einem Glasdom (4) und einer Überwurfmutter (5), die eine Graphithülsendichtung (6) gegen den Glasdom (4) zur Anlage bringt,
einem Metallhalter (2), auf dem der Glasdom (4) montiert ist, und
Anschlüssen (3) am Metallhalter (2) und Schlitzmuttern (8), mit denen die Kapillaren (7, 10, 11, 13) über Graphithülsendichtungen (9) jeweils gegen die Anschlüsse (3) pressbar sind, wobei für vakuumschonenden Wechsel der Kapillaren (7, 11, 13) eine dieser Kapillaren (11) zu einem Niederdrucksystem führt, wie z. B. einem Massenspektrometer, und mindestens eine andere Kapillare (13) zur Ableitung des überschüssigen Gas aus der Spülgaskapillare (10) dient.

2. Verwendung einer Verbindungsvorrichtung (1) gemäß Anspruch 1, **dadurch gekennzeichnet, dass** die Zahl n der Ausgangskapillaren mit n = 2, 3, 4, ... vorgesehen ist.

3. Verwendung einer Verbindungsvorrichtung (1) gemäß Anspruch 2, **dadurch gekennzeichnet, dass** die Ausgangskapillaren (13) zu Detektoren führen, die insbesondere bei Atmosphärendruck arbeiten.

4. Verwendung einer Verbindungsvorrichtung (1) gemäß Anspruch 1, **dadurch gekennzeichnet, dass** ein festes Teilungsverhältnis zwischen zwei Ausgangskapillaren (11, 13) durch die Auswahl geeigneter Länge und Innendurchmesser der Kapillare (11) zum Niederdrucksystem bestimmbar ist.

5. Verfahren zum vakuumschonenden Wechsel der Kapillare (7) bei Verwendung einer Verbindungsvorrichtung (1) gemäß Anspruch 1, **gekennzeichnet durch** Abschrauben der Schlitzmutter (8) vom Metallhalter (2) und seitliches Wegnehmen von der Kapillare (7) zum Wechseln der Kapillare (7), Zuführen von Helium im Überschuss **durch** Spülgaskapillare (10) während des Wechselns und
Einstellen der ursprünglichen Flußrate für das Helium aus der Spülgaskapillare (10) nach Anschluss der Kapillare (7).

6. Anschluss (3) zur Kopplung von Kapillaren (7, 10, 11, 13), insbesondere zur Kopplung einer Trennkapillare (7), einer Spülgaskapillare (10) oder Ausgangskapillare (11, 13) in der Gaschromatographie oder zur Kopplung einer Trennkapillare (7) mit einer Restriktionskapillare (11) zu einem Niederdrucksystem, wie z. B. einem Massenspektrometer, einer Spülgaskapillare (10) oder einer Ausgangskapillare (13), mit einem Glaseinsatz (14), der mit einer Graphithülsendichtung (9) in einer Schraube (15) montiert ist, und einem Verbindungsadapter (16), in den der Glaseinsatz (14) mit einer Graphithülsendichtung (9) montiert ist, für eine Kapillare (11) zu einem Niederdrucksystem, wie z. B. einem Massenspektrometer.

7. Anschluss (3) gemäß Anspruch 6, **dadurch gekennzeichnet, dass** die Kapillare (11) zum Niederdrucksystem mit einem Einsatz (17) im Verbindungsadapter (16) gehalten ist und eine Silberdichtung (18) vorgesehen ist zwischen Einsatz (17) und Verbindungsadapter (16).

8. Anschluss (3) gemäß Anspruch 6, **dadurch gekennzeichnet, dass** die Schraube (15) als Metallhohlschraube ausgebildet ist.
